# FASCICULE DE BREVET EUROPEEN

(11) **EP 2 875 301 B1**
(45) Date de publication et mention de la délivrance du brevet: **06.12.2017**
(21) Numéro de dépôt: 13747442.5
(22) Date de dépôt: 12.07.2013
(51) Int. Cl.: F27D 3/06, F27B 1/21, F27B 7/33, C04B 2/12, C04B 7/47, F27B 7/28, F27B 1/14

(54) **EXTRACTEUR A TIROIR POUR L'EXTRACTION DE MATIERES MINERALES A HAUTE TEMPERATURE**
VERSCHIEBBARER EXTRAKTOR
SLIDE TYPE EXTRACTOR

(30) Priorité: 17.07.2012 FR 1256892
(43) Date de publication de la demande: 27.05.2015
(73) Titulaire: Vicat, 92095 Paris La Défense (FR)
(72) Inventeur: DE LA FOUCHARDIERE, René, 3000 Nimes (FR); GAUDENZI, Frédéric, 73370 Le Bourget Du Lac (FR); PASERI, Jean Denis, 38140 Renage (FR); BEAUVENT, Guy, 62720 Wierre Effroy (FR)
(74) Mandataire: Verriest, Philippe
(86) Numéro de dépôt international: PCT/FR2013/051679
(87) Numéro de publication internationale: WO 2014/013169

(56) Documents cités:
- FR-A1- 2 928 643

## Description

La présente invention concerne un extracteur à tiroir pour l'extraction et le transfert de matières minérales granulaires à haute température contenues dans une première enceinte, ainsi qu'une installation comportant ce dispositif.

Les extracteurs à tiroir sont classiquement utilisés pour convoyer des matières minérales en morceaux ou en granules depuis des silos vers des systèmes de traitement tels que des broyeurs, des concasseurs, des transporteurs ou autres, de manière continue ou discontinue.

Dans les lignes de production de sable, il est par exemple connu d'alimenter uniformément, avec un extracteur à tiroir, les trémies d'alimentation des concasseurs ou des broyeurs.

Les extracteurs à tiroir permettent d'ajuster le débit de façon précise, présentent une structure et une conception simple rendant la maintenance aisée et économique, une puissance utile faible, et un encombrement et des investissements réduits.

Si dans la majorité des cas, les extracteurs à tiroir sont utilisés pour des matières minérales granulaires à températures ambiantes, il est connu d'utiliser ces extracteurs pour des matières minérales granulaires à haute température. Par «haute température » on entend une température égale à plusieurs centaines de degré, voire supérieure à 1000°C.

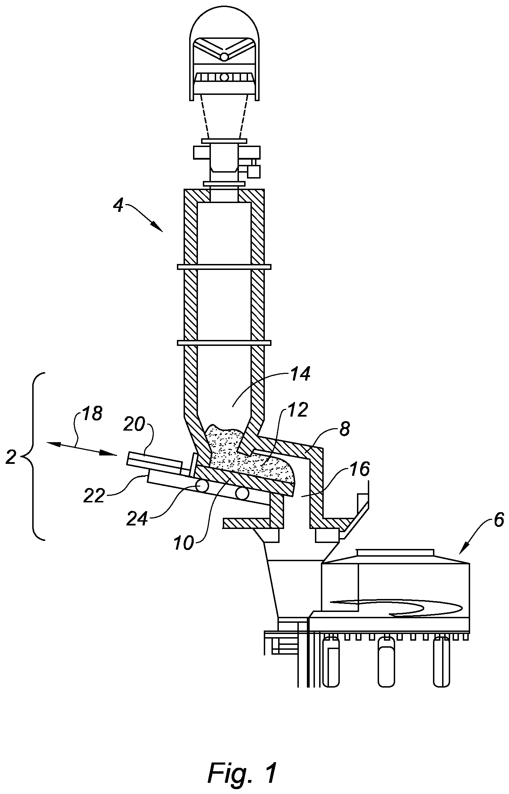

La figure 1 représente un dispositif 2 pour l'extraction de matières minérales granulaires contenues dans un four droit 4 et le transfert dans un four à passage 6, connu par le document FR2928643.

Ce dispositif 2 comporte une partie supérieure fixe 8 et une partie inférieure mobile 10 délimitant un conduit 12 pour l'écoulement des matières minérales granulaires. Ce conduit 12 est pourvu d'une bouche d'entrée 14 raccordée au four droit 4 et d'une bouche de sortie 16 raccordée au four à passage 6. Les bouches d'entrée 14 et de sortie 16 sont décalées verticalement et horizontalement.

La partie mobile 10 est déplaçable dans une direction 18 entre une position avancée et une position reculée, pour permettre l'écoulement des matières minérales granulaires dans le conduit 12.

Le dispositif 2 comporte un vérin 20 formant moyens de déplacement alternatif de la partie mobile 10 et des rails 22 associés à des galets 24 montés sur la partie mobile 10 formant moyen de guidage de cette partie mobile 10.

Un inconvénient du dispositif 2 est que les parties fixe 8 et mobile 10 sont susceptibles de se dilater sous l'effet de la chaleur, et par suite de se déformer de manière irréversible. Dans ces conditions, le mouvement relatif de la partie mobile 10 par rapport à la partie fixe 8 peut se détériorer au fil du temps. En outre, la nature abrasive des matières minérales use rapidement les parties fixe 8 et mobile 10. Ainsi, le dispositif 2 engendre des coûts de maintenance conséquents pour l'exploitant.

Un autre inconvénient du dispositif 2 est que l'herméticité du conduit 12 est insatisfaisante. Dans ces conditions, un flux d'air ambiant pénètre dans ce conduit 12 et abaisse la température des matières minérales granulaires. La consommation énergétique du four à passage 6 doit alors être accrue pour pouvoir porter les matières minérales granulaires à une température de l'ordre de 1250 à 1450°C, nécessaire à l'obtention d'un clinker. Cette surconsommation énergétique engendre un coût pour l'exploitant et est préjudiciable à l'environnement.

L'invention vise à remédier à tout ou partie de ces inconvénients.

L'invention concerne un dispositif pour l'extraction et le transfert de matières minérales granulaires à haute température contenues dans une première enceinte comportant :
- une partie supérieure fixe et une partie inférieure mobile délimitant un conduit, ce conduit étant pourvu d'une bouche d'entrée susceptible d'être raccordée à la première enceinte et d'une bouche de sortie, les bouches d'entrée et de sortie étant décalées verticalement et horizontalement ;
   la partie inférieure mobile étant déplaçable dans une direction déterminée alternativement entre une position avancée et une position reculée, et inversement, pour permettre l'écoulement des matières minérales granulaires dans le conduit ; et
- des moyens de déplacement et de guidage de la partie mobile relativement à la partie fixe ;
   caractérisé en ce que la partie fixe et la partie mobile comprennent chacune une enveloppe externe métallique, et une enveloppe interne réalisée par empilement d'au moins:
- un premier revêtement en un matériau thermiquement isolant monté sur l'enveloppe externe métallique ; et
- un deuxième revêtement en un matériau réfractaire monté sur le premier revêtement.

Le dispositif selon l'invention trouve application pour l'extraction et le transfert de matières minérales granulaires en phase solide, ou faiblement fusionnée, et ayant tendance à peu coller.

Le premier revêtement en un matériau thermiquement isolant protège l'enveloppe externe métallique des parties fixe et mobile contre les contraintes thermiques. Ainsi, la dilatation des parties fixe et mobile est limitée.

Le deuxième revêtement en un matériau réfractaire protège le premier revêtement en un matériau thermiquement isolant des parties fixe et mobile contre l'abrasion. Ainsi, l'usure des parties fixe et mobile est ralentie.

Par conséquent, la présence conjointe d'un premier revêtement en un matériau thermiquement isolant et d'un deuxième revêtement en un matériau réfractaire permet d'allonger la durée de vie du dispositif, et de réduire les coûts de maintenance.

Il peut être ajouté que le dispositif selon l'invention présente un encombrement réduit, ce qui autorise son utilisation dans tout type d'installation pour la fabrication de ciment.

De préférence, chaque revêtement en un matériau thermiquement isolant comprend une conductivité thermique à 1000°C comprise entre 0,05 et 0,4 W/m.K, une densité comprise entre 50 et 500 kg/m3, et/ou une résistance à la compression comprise entre 0,1 et 0,5 MPa.

Toujours de manière préférentielle, chaque revêtement en un matériau réfractaire comprend une conductivité thermique à 1000°C comprise entre 0,2 et 2,5 W/m.K, une densité comprise entre 1000 et 3000 kg/m3, et/ou une résistance à la compression comprise entre 20 et 120 MPa. Par exemple, le matériau réfractaire peut être du carbure de silicium.

La bouche d'entrée est raccordée à la première enceinte, sous cette première enceinte. La bouche de sortie peut être raccordée à une seconde enceinte.

La première enceinte peut être un four de décarbonatation, un four de clinkérisation ou un préchauffeur. La première enceinte peut être un four droit, un four à passage, un four rotatif, ou autre.

La seconde enceinte peut être un four de décarbonatation, un four de clinkérisation, un refroidisseur. La seconde enceinte peut être un four droit, un four à passage, un four rotatif, un refroidisseur à grilles à déplacement alternatif (reciprocating grate cooler), ou autre.

La bouche de sortie peut ne pas être raccordée à une seconde enceinte. Dans ce cas, la bouche de sortie débouche vers l'extérieur.

Le dispositif selon l'invention peut comporter une ou plusieurs des caractéristiques suivantes.

Avantageusement, la partie mobile comprend une paroi de fond, ou sole, présentant une extrémité amont à l'aplomb de la bouche d'entrée et une extrémité aval tournée vers la bouche de sortie ; et
la sole est inclinée de haut en bas, de son extrémité amont vers son extrémité aval.

Dans ces conditions, les matières minérales granulaires tombent par gravité à l'intérieur du conduit sur la sole. L'écoulement des matières minérales granulaires dans le conduit est réalisé par déplacement alternatif de la partie mobile et est facilité par l'inclinaison de la sole.

Suivant une caractéristique, l'extrémité amont de la sole comprend un redent transversal à la direction de déplacement de la partie mobile.

Dans ces conditions, lorsque la partie mobile est déplacée alternativement de sa position avancée vers sa position reculée, les matières minérales granulaires tombent sur la sole en aval du redent.

Lorsque la partie mobile est déplacée de sa position reculée vers sa position avancée, le redent repousse les matières minérales granulaires en direction de la bouche de sortie, facilitant plus encore l'écoulement des matières minérales granulaires dans le conduit.

Avantageusement, le dispositif comprend des moyens d'étanchéité agencés entre et/ou autour des parties fixe et mobile, de telle sorte que ce conduit soit hermétiquement clos.

Ainsi, la quantité d'air ambiant admise dans le conduit, et susceptible d'abaisser la température des matières minérales granulaires, est réduite. Par suite, le bilan thermique d'une installation équipée d'un dispositif selon l'invention est amélioré.

Suivant une caractéristique, la partie mobile comprend des première et deuxième parois latérales parallèles à sa direction de déplacement, ces première et deuxième parois latérales présentant chacune une extrémité amont et une extrémité aval ; et
les moyens d'étanchéité comprennent un soufflet connecté d'une part à la partie fixe et d'autre part aux extrémités aval de la sole et des première et deuxième parois latérales de la partie mobile.

Un tel soufflet assure l'étanchéité entre la partie fixe et les extrémités aval de la sole et des première et deuxième parois latérales de la partie mobile.

Suivant une autre caractéristique, la partie fixe comprend des première et deuxième parois latérales parallèles à la direction de déplacement de la partie mobile ;
les première et deuxième parois latérales de la partie mobile présentent, à proximité de leurs bords supérieurs, au moins une rainure ou nervure formée dans le revêtement en matériau réfractaire, parallèle à la direction de déplacement de la partie mobile ; et
les première et deuxième parois latérales de la partie fixe présentent, à proximité de leurs bords inférieurs, au moins une nervure ou rainure formée dans le revêtement en matériau réfractaire, parallèle à la direction de déplacement de la partie mobile, et agencée pour coopérer sans contact avec, respectivement, la rainure ou nervure formée dans le revêtement en matériau réfractaire de la partie mobile.

L'association d'une nervure et d'une rainure forme une chicane s'opposant à la propagation rectiligne du rayonnement thermique, et par conséquent à la perte de chaleur des matières minérales granulaires par rayonnement thermique.

En outre, une telle chicane crée une perte de charge qui limite la circulation d'air chaud de l'intérieur du conduit vers l'extérieur de ce conduit.

Suivant une autre caractéristique, la partie mobile comprend une troisième paroi latérale transversale à sa direction de déplacement, reliant les première et deuxième parois latérales ; et

La partie fixe comprend une troisième paroi latérale transversale à la direction de déplacement de la partie mobile, reliant les première et deuxième parois latérales.

Avantageusement, les moyens d'étanchéité comprennent :
- une rigole s'étendant à partir des première, deuxième et troisième parois latérales de la partie fixe, conformée en 'U' en vue de dessus, entourant les première, deuxième et troisième parois latérales de la partie mobile, et contenant un fluide, tel que de l'eau ou de l'huile, ou une composition granulaire, telle que du sable ;
- un retour s'étendant à partir des première, deuxième et troisième parois latérales de la partie mobile, immergé dans le fluide ou la composition granulaire ; et
le retour est agencé pour se déplacer à l'intérieur de la rigole sans contact avec celle-ci, lors du déplacement de la partie mobile.

L'association de la rigole et du retour forme un joint d'étanchéité entre les première, deuxième, et troisième parois latérales de la partie fixe et les première, deuxième, et troisième parois latérales de la partie mobile.

L'invention concerne également une installation comportant :
- une première enceinte adaptée pour porter les matières minérales granulaires à haute température ; et
- un dispositif d'extraction tel que présenté précédemment.

Suivant une caractéristique, l'installation comporte une seconde enceinte pour recevoir les matières minérales granulaires extraites de la première enceinte, et la bouche de sortie du conduit est raccordée à cette seconde enceinte.

L'invention sera mieux comprise à l'aide de la description qui suit en référence au dessin schématique annexé représentant, à titre d'exemple, un dispositif pour l'extraction et le transfert de matières minérales granulaires à haute température contenues dans une première enceinte selon l'invention.
Figure 1 est une vue en coupe d'un dispositif connu par le document FR2928643 ;
Figure 2 est une vue de côté d'un extracteur à tiroir selon l'invention;
Figure 3 est une vue en coupe selon la ligne III-III de figure 2;
Figures 4 et 5 sont deux vues en coupe du dispositif de figure 2 selon la ligne IV-IV de figure 3, dans lesquelles la partie mobile est respectivement en position avancée et en position reculée ;
Figure 6 en est une vue en coupe selon la ligne VI-VI de figure 3.

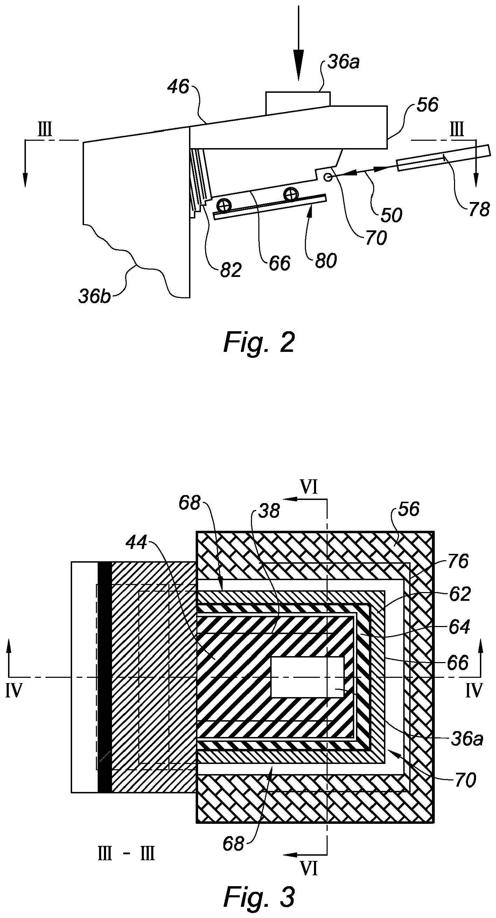

Les figures 2 à 5 représentent un dispositif 30 pour l'extraction de matières minérales granulaires à haute température contenues dans un four de décarbonatation et le transfert de ces matières minérales granulaires dans un four de clinkérisation. Dans l'exemple, la température des matières minérales contenues dans le four de décarbonatation est de l'ordre de 1000°C.

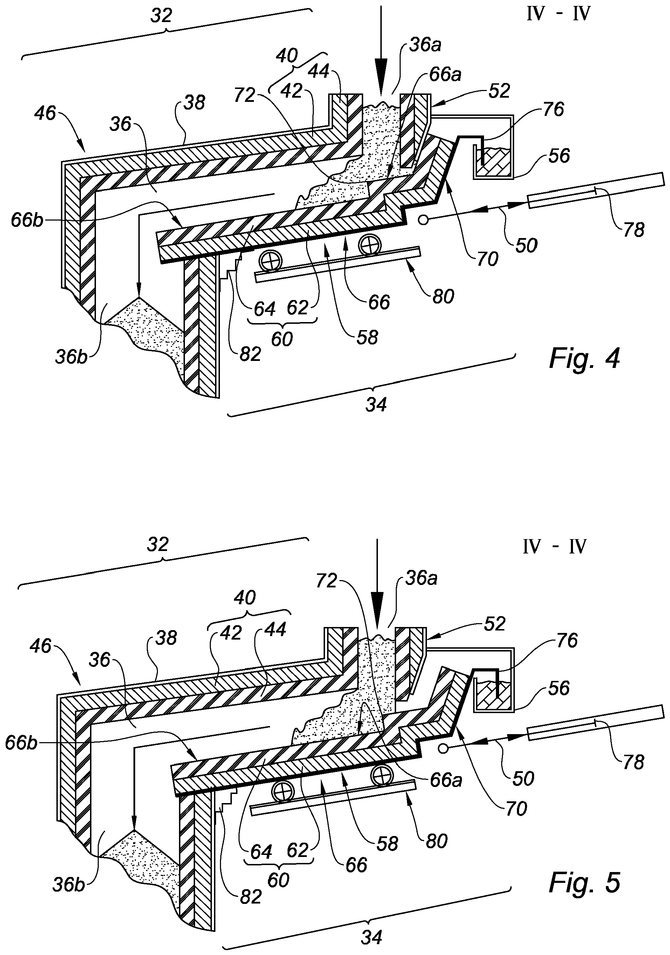

Le dispositif 30 comporte une partie supérieure fixe 32 et une partie inférieure mobile 34 délimitant un conduit 36 (représenté aux figures 4 et 5) pour l'écoulement des matières minérales granulaires.

Le conduit 36 est pourvu d'une bouche d'entrée 36a raccordée au four de décarbonatation et d'une bouche de sortie 36b raccordée au four de clinkérisation. Les bouches d'entrée 36a et de sortie 36b sont décalées verticalement et horizontalement.

La partie fixe 32 comprend une enveloppe externe 38 métallique, et une enveloppe interne 40 réalisée par empilement de:
- un revêtement 42 en un matériau thermiquement isolant monté sur l'enveloppe externe 38 ; et
- un revêtement 44 en un matériau réfractaire monté sur le revêtement 42.

La partie fixe 32 comprend une paroi de dessus 46, des parois latérales 48 parallèles à une direction 50, et une paroi latérale 52 transversale à la direction 50 reliant les parois latérales 48.

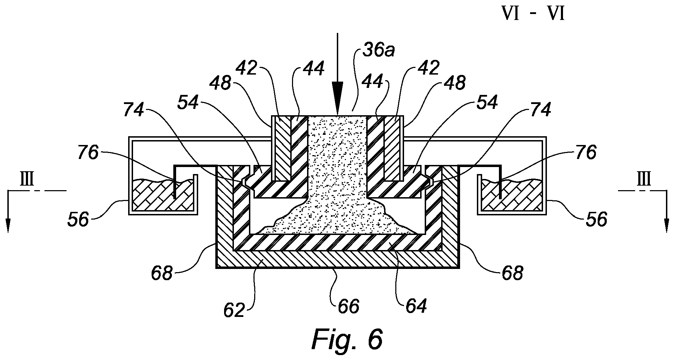

Les parois latérales 48 présentent, à proximité de leurs bords inférieurs des nervures 54 (représentées à la figure 6) formées dans les revêtements 44. Les nervures 54 sont parallèles à la direction 50. La fonction des nervures 54 apparaitra par la suite.

La partie fixe 32 comprend en outre une rigole 56 s'étendant à partir des parois latérales 48 et 52, et tournée vers le bas. La rigole 56 est conformée en 'U' en vue de dessus (tel que représenté à la figure 3). La rigole 56 contient un fluide, tel que de l'eau ou de l'huile, ou une composition granulaire, telle que du sable. La fonction de la rigole 56 apparaitra par la suite.

La partie mobile 34 est déplaçable alternativement dans la direction 50 entre une position avancée (représentée à la figure 4) et une position reculée (représentée à la figure 5), pour permettre le transfert des matières minérales granulaires dans le conduit 36 par déplacement alternatif.

La partie mobile 34 comprend une enveloppe externe 58 métallique, et une enveloppe interne 60 réalisée par empilement de:
- un revêtement 62 en un matériau thermiquement isolant monté sur l'enveloppe externe 58 métallique ; et
- un revêtement 64 en un matériau réfractaire monté sur le revêtement 62.

La partie mobile 34 comprend une paroi de fond ou sole 66, des parois latérales 68 (représentées à la figure 6) parallèles à la direction 50, et une paroi latérale 70 transversale à la direction 50 reliant les parois latérales 68.

La sole 66 présente une extrémité amont 66a et une extrémité aval 66b. La sole 66 est inclinée de haut en bas, de son extrémité amont 66a vers son extrémité aval 66b.

Dans cette description, les termes « amont » et « aval » sont utilisés en référence au sens d'écoulement des matières minérales granulaires dans le conduit 36.

L'extrémité amont 66a s'étend à l'aplomb de la bouche d'entrée 36a du conduit 36. L'extrémité amont 36a comprend un redent 72 transversal à la direction 50. L'extrémité aval 66b est tournée vers la bouche de sortie 36b du conduit 36.

Les parois latérales 68 présentent chacune une extrémité amont et une extrémité aval. Les parois latérales 68 présentent, à proximité de leurs bords supérieurs des rainures 74 (représentées à la figure 6) formées dans les revêtements 64 en matériau réfractaire. Les rainures 74 sont parallèles à la direction 50. Ces rainures 74 sont agencées pour coopérer sans contact avec, respectivement, les nervures 54 formées dans le revêtement 44 en matériau réfractaire de la partie fixe 32.

La partie mobile 34 comprend également un retour 76 s'étendant à partir des parois latérales 68 et 70, tourné vers le bas, et conformé en 'U' en vue de dessus (tel que représenté à la figure 3).

La rigole 56 et le retour 76 sont agencés de telle sorte que la rigole 56 entoure les parois latérales 68 et 70 de la partie mobile 40 (tel que représenté à la figure 3), et que le bord inférieur du retour 76 soit immergé dans le fluide ou la composition granulaire, et puisse se déplacer à l'intérieur de la rigole 56 sans contact avec celle-ci, lors du déplacement alternatif de la partie mobile 34 en position avancée et en position reculée.

Le niveau de fluide ou de sable est tel que lorsque du déplacement alternatif de la partie mobile 34, le bord inférieur du retour 76 soit en permanence immergé dans le fluide ou le sable.

Les chicanes formées par les nervures 54 et rainures 74 permettent de limiter la dépression s'exerçant sur la rigole 56 et le retour 76.

Le dispositif 30 comporte des moyens de déplacement alternatif 78 de la partie mobile 34. Ces moyens de déplacement alternatif 78 comprennent par exemple un vérin pneumatique, un vérin hydraulique ou un mécanisme d'embiellage associé à un moteur.

Le dispositif 30 comporte des moyens de guidage 80 de la partie mobile 34 relativement à la partie fixe 32. Ces moyens de guidage 80 comprennent par exemple une pluralité de roulettes fixées sous la sole 66 de la partie mobile et engagées dans des rails parallèles à la sole 66.

Le dispositif 30 comporte un soufflet 82 textile résistant aux hautes températures. Par exemple, le soufflet est en fibres céramiques, comme les fibres connues sous les références Hytex 2500 ou Nextel, par exemple. Le soufflet 82 est connecté d'une part à la partie fixe 32 et d'autre part aux extrémités aval de la paroi de fond 66 et des parois latérales 68 de la partie mobile 34. Le soufflet 82 est susceptible de s'étendre, et en alternance de se contracter, en réponse au déplacement alternatif de la partie mobile 34 en position reculée et en position avancée. Ainsi, le soufflet 82 présente une forme générale de 'U', dans un plan vertical.

Les nervures 54 et rainures 74, la rigole 56 et le retour 76, et le soufflet 82, forment des moyens d'étanchéité agencés entre les parties fixe 32 et mobile 34 du conduit 36 pour rendre ce conduit 36 hermétique à l'air ambiant.

En conditions d'utilisation, le vérin 78 anime la partie mobile 34 d'un mouvement alternatif entre sa position avancée et sa position reculée.

Lorsque la partie mobile 34 est déplacée de sa position avancée vers sa position reculée (tel que représenté à la figure 5), les matières minérales granulaires issues du four de décarbonatation, amenées par la bouche d'entrée 36a, tombent par gravité sur la paroi de fond 66 de la partie mobile 34, en aval du redent 72.

Lorsque la partie mobile 34 est déplacée de sa position reculée vers sa position avancée (tel que représenté à la figure 4), le redent 72 repousse les matières minérales granulaires en direction de la bouche de sortie 36b.

Il est possible d'ajuster le débit d'extraction des matières minérales granulaires en jouant sur la fréquence et la course de la partie mobile 34.

Une augmentation de la fréquence augmente le débit d'extraction. Une diminution de la fréquence réduit le débit d'extraction.

Un allongement de la course augmente le débit d'extraction. Un raccourcissement de la course diminue le débit d'extraction.

Un extracteur à tiroir selon l'invention peut, par exemple être installé au pied d'un four droit briqueté de 75 cm de diamètre intérieur et de 3m de hauteur. L'extracteur peut posséder une largeur hors tout de1,25 m et une longueur hors tout de 1,60 m. La sole de l'extracteur peut posséder une longueur de 1,40 m et une largeur de 0,85 m. La course de l'extracteur peut être de 40 mm et chaque aller-retour permet d'extraire environ 5kg de matière à haute température, par exemple de l'ordre de 1200°C.

Cet extracteur peut servir à l'extraction de matières minérales granulaires à haute température, de l'ordre de 1250 à 1450°C, contenues dans un four de clinkérisation et le transfert de ces matières minérales granulaires dans un refroidisseur.

Comme il va de soi, l'invention ne se limite pas à la seule forme d'exécution du dispositif décrite ci-dessus à titre d'exemple, elle en embrasse au contraire toutes les variantes de réalisation, dans le cadre des revendications ci-jointes. Il est par exemple possible d'ajouter des joints d'étanchéité, et des chicanes additionnelles permettant d'éviter les déperditions de chaleur et les entrées d'air ambiant lorsque le dispositif est en dépression par rapport à l'atmosphère.

La sole n'est pas nécessairement inclinée mais pourrait être horizontale.

## Revendications

1. Extracteur à tiroir (30) pour l'extraction et le transfert de matières minérales granulaires à haute température contenues dans une première enceinte comportant :
- une partie supérieure fixe (32) et une partie inférieure mobile (34) délimitant un conduit (36), ce conduit (36) étant pourvu d'une bouche d'entrée (36a) susceptible d'être raccordée à la première enceinte et d'une bouche de sortie (36b), les bouches d'entrée (36a) et de sortie (36b) étant décalées horizontalement et verticalement ;
la partie inférieure mobile (34) étant déplaçable dans une direction déterminée (50) alternativement entre une position avancée et une position reculée pour permettre l'écoulement des matières minérales granulaires dans le conduit (36) ; et
- des moyens de déplacement et de guidage (78, 80) de la partie mobile (34) relativement à la partie fixe (32);
**caractérisé en ce que** la partie fixe (32) et la partie mobile (34) comprennent chacune une enveloppe externe (38 ; 58) métallique, et une enveloppe interne (40 ; 60) réalisée par empilement d'au moins:
- un premier revêtement (42 ; 62) en un matériau thermiquement isolant monté sur l'enveloppe externe métallique (38 ; 58) ; et
- un deuxième revêtement (44 ; 64) en un matériau réfractaire monté sur le premier revêtement (42 ; 62).

2. Extracteur à tiroir (30) selon la revendication 1, **caractérisé en ce que** la partie mobile (34) comprend une paroi de fond (66), ou sole, présentant une extrémité amont (66a) à l'aplomb de la bouche d'entrée (36a) et une extrémité aval (66b) tournée vers la bouche de sortie (36b) ;
et **en ce que** la sole (66) est inclinée de haut en bas, de son extrémité amont (66a) vers son extrémité aval (66b).

3. Extracteur à tiroir selon la revendication 2, **caractérisé en ce que** l'extrémité amont (66a) de la sole (66) comprend un redent (72) transversal à la direction (50) de déplacement de la partie mobile (34).

4. Extracteur à tiroir selon l'une quelconque des revendications 1 à 3, **caractérisé en ce qu'**il comprend des moyens d'étanchéité agencés entre et/ou autour des parties fixe (32) et mobile (34), de telle sorte que le conduit (36) soit hermétiquement clos.

5. Extracteur à tiroir selon l'une quelconque des revendications 2 ou 3 en combinaison avec la revendication 4, **caractérisé en ce que** la partie mobile (34) comprend des première et deuxième parois latérales (68) parallèles à sa direction de déplacement (50), ces première et deuxième parois latérales (68) présentant chacune une extrémité amont et une extrémité aval ; et
**en ce que** les moyens d'étanchéité comprennent un soufflet (82) connecté d'une part à la partie fixe (32) et d'autre part aux extrémités aval de la paroi de fond (66) et des première et deuxième parois latérales (68) de la partie mobile (34).

6. Extracteur à tiroir selon la revendication 4 ou 5, **caractérisé en ce que** la partie fixe (32) comprend des première et deuxième parois latérales (48) parallèles à la direction de déplacement (50) de la partie mobile (34) ;
**en ce que** les première et deuxième parois latérales (68) de la partie mobile (34) présentent, à proximité de leurs bords supérieurs, au moins une rainure (74) ou nervure formée dans le revêtement en matériau réfractaire (64), parallèle à la direction de déplacement (50) de la partie mobile (34) ; et
**en ce que** les première et deuxième parois latérales (48) de la partie fixe présentent, à proximité de leurs bords inférieurs, au moins une nervure (54) ou rainure formée dans le revêtement en matériau réfractaire (44), parallèle à la direction de déplacement (50) de la partie mobile (34), et agencée pour coopérer sans contact avec, respectivement, la rainure (74) ou nervure formée dans le revêtement en matériau réfractaire (64) de la partie mobile (34).

7. Extracteur à tiroir selon l'une des revendications 4 à 6, **caractérisé en ce que** la partie mobile (34) comprend une troisième paroi latérale (70) transversale à sa direction de déplacement (50), reliant les première et deuxième parois latérales (68) ; et
**en ce que** la partie fixe (32) comprend une troisième paroi latérale (52) transversale à la direction de déplacement (50) de la partie mobile (34), reliant les première et deuxième parois latérales (48).

8. Extracteur à tiroir selon la revendication 7, **caractérisé en ce que** les moyens d'étanchéité comprennent :
- une rigole (56) s'étendant à partir des première, deuxième et troisième parois latérales (48, 52) de la partie fixe, conformée en 'U' en vue de dessus, entourant les première, deuxième et troisième parois latérales (68, 70) de la partie mobile (34), et contenant un fluide, tel que de l'eau ou de l'huile, ou une composition granulaire, telle que du sable ;
- un retour (76) s'étendant à partir des première, deuxième et troisième parois latérales (68, 70) de la partie mobile (34), immergé dans le fluide ou la composition granulaire ; et
**en ce que** le retour (76) est agencé pour se déplacer à l'intérieur de la rigole (56) sans contact avec celle-ci, lors du déplacement de la partie mobile (34).

9. Installation **caractérisée en ce qu'**elle comporte :
- une première enceinte adaptée pour porter les matières minérales granulaires à haute température ; et
- un extracteur à tiroir selon l'une quelconque des revendications 1 à 8.

10. Installation selon la revendication 9 **caractérisée en ce qu'**elle comporte une seconde enceinte pour recevoir les matières minérales granulaires extraites de la première enceinte, et la bouche de sortie (36b) du conduit (36) est raccordée à cette seconde enceinte.

## Patentansprüche

1. Abziehvorrichtung mit Schubkasten (30) zum Abziehen und Transferieren von körnigen mineralischen Stoffen mit hoher Temperatur, die in einem ersten Behältnis enthalten sind, umfassend:
- einen oberen festen Abschnitt (32) und einen unteren beweglichen Abschnitt (34), die einen Kanal (36) begrenzen, wobei dieser Kanal (36) mit einer Eintrittsmündung (36a), die an das erste Behältnis angeschlossen werden kann, und mit einer Austrittsmündung (36b) versehen ist, wobei die Eintritts-(36a) und Austrittsmündung (36b) horizontal und vertikal versetzt sind;
wobei der untere bewegliche Abschnitt (34) in einer bestimmten Richtung (50) wechselweise zwischen einer vorgerückten Stellung und einer zurückgezogenen Stellung verschiebbar ist, um das Abfließen der körnigen mineralischen Stoffe in den Kanal (36) zu ermöglichen; und
- Mittel zum Verschieben und Führen (78, 80) des beweglichen Abschnitts (34) relativ zu dem festen Abschnitt (32);
**dadurch gekennzeichnet, dass** der feste Abschnitt (32) und der bewegliche Abschnitt (34) jeder eine metallische Außenhülle (38; 58) und eine Innenhülle (40; 60) umfassen, die durch Stapelung ausgeführt ist von mindestens:
- einer ersten Verkleidung (42; 62) aus einem thermisch isolierenden Material, die auf der metallischen Außenhülle (38; 58) montiert ist; und
- einer zweiten Verkleidung (44; 64) aus einem feuerfesten Material, die auf der ersten Verkleidung (42; 62) montiert ist.

2. Abziehvorrichtung mit Schubkasten (30) nach Anspruch 1, **dadurch gekennzeichnet, dass** der bewegliche Abschnitt (34) eine Bodenwandung (66) oder Sohle umfasst, die ein stromaufwärtiges Ende (66a) lotrecht zur Eintrittsmündung (36a) und ein stromabwärtiges Ende (66b) aufweist, das der Austrittsmündung (36b) zugewandt ist;
und dadurch, dass die Sohle (66) von ihrem stromaufwärtigen Ende (66a) zu ihrem stromabwärtigen Ende (66b) von oben nach unten geneigt ist.

3. Abziehvorrichtung mit Schubkasten nach Anspruch 2, **dadurch gekennzeichnet, dass** das stromaufwärtige Ende (66a) der Sohle (66) eine Stufe (72) quer zur Verschieberichtung (50) des beweglichen Abschnitts (34) umfasst.

4. Abziehvorrichtung mit Schubkasten nach einem der Ansprüche 1 bis 3, **dadurch gekennzeichnet, dass** sie Dichtungsmittel umfasst, die zwischen und/oder um dem/den festen (32) und beweglichen Abschnitt (34) angeordnet sind, derart, dass der Kanal (36) hermetisch geschlossen ist.

5. Abziehvorrichtung mit Schubkasten nach einem der Ansprüche 2 oder 3 in Kombination mit Anspruch 4, **dadurch gekennzeichnet, dass** der bewegliche Abschnitt (34) erste und zweite Seitenwandungen (68) umfasst, die zu seiner Verschieberichtung (50) parallel sind, wobei diese erste und zweite Seitenwandung (68) jede ein stromaufwärtiges Ende und ein stromabwärtiges Ende aufweisen; und
dadurch, dass die Dichtungsmittel einen Balg (82) umfassen, der einerseits mit dem festen Abschnitt (32) und andererseits mit den stromabwärtigen Enden der Bodenwandung (66) und der ersten und zweiten Seitenwandung (68) des beweglichen Abschnitts (34) verbunden ist.

6. Abziehvorrichtung mit Schubkasten nach Anspruch 4 oder 5, **dadurch gekennzeichnet, dass** der feste Abschnitt (32) erste und zweite Seitenwandungen (48) umfasst, die zur Verschieberichtung (50) des beweglichen Abschnitts (34) parallel sind;
dadurch, dass die erste und zweite Seitenwandung (68) des beweglichen Abschnitts (34) in der Nähe ihrer Oberkanten mindestens eine Rille (74) oder Rippe aufweisen, die in der Verkleidung aus feuerfestem Material (64) parallel zur Verschieberichtung (50) des beweglichen Abschnitts (34) gebildet ist; und
dadurch, dass die erste und zweite Seitenwandung (48) des festen Teils in der Nähe ihrer Unterkanten mindestens eine Rippe (54) oder Rille aufweisen, die in der Verkleidung aus feuerfestem Material (44) parallel zur Verschieberichtung (50) des beweglichen Abschnitts (34) gebildet und dafür eingerichtet ist, berührungslos mit der Rille (74) bzw. Rippe, die in der Verkleidung aus feuerfestem Material (64) des beweglichen Abschnitts (34) gebildet ist, zusammenzuwirken.

7. Abziehvorrichtung mit Schubkasten nach einem der Ansprüche 4 bis 6, **dadurch gekennzeichnet, dass** der bewegliche Abschnitt (34) eine dritte Seitenwandung (70) quer zu seiner Verschieberichtung (50) umfasst, die die erste und zweite Seitenwandung (68) miteinander verbindet; und
dadurch, dass der feste Abschnitt (32) eine dritte Seitenwandung (52) quer zur Verschieberichtung (50) des beweglichen Abschnitts (34) umfasst, die die erste und zweite Seitenwandung (48) miteinander verbindet.

8. Abziehvorrichtung mit Schubkasten nach Anspruch 7, **dadurch gekennzeichnet, dass** die Dichtungsmittel umfassen:
- eine in Draufsicht als "U" ausgebildete Rinne (56), die sich von der ersten, zweiten und dritten Seitenwandung (48, 52) des festen Abschnitts ausgehend erstreckt, die die erste, zweite und dritte Seitenwandung (68, 70) des beweglichen Abschnitts (34) umgibt und die eine Flüssigkeit, wie Wasser oder Öl, oder eine körnige Zusammensetzung wie Sand enthält;
- eine in die Flüssigkeit oder die körnige Zusammensetzung eingetauchte Rückwendung (76), die sich von der ersten, zweiten und dritten Seitenwandung (68, 70) des beweglichen Abschnitts (34) ausgehend erstreckt; und
dadurch, dass die Rückwendung (76) dafür eingerichtet ist, sich im Inneren der Rinne (56) berührungslos mit derselben bei Verschiebung des beweglichen Abschnitts (34) zu verschieben.

9. Anlage, **dadurch gekennzeichnet, dass** sie umfasst:
- ein erstes Behältnis, das dafür eingerichtet ist, die körnigen mineralischen Stoffe mit hoher Temperatur zu tragen; und
- eine Abziehvorrichtung mit Schubkasten nach einem der Ansprüche 1 bis 8.

10. Anlage nach Anspruch 9, **dadurch gekennzeichnet, dass** sie ein zweites Behältnis zum Aufnehmen der aus dem ersten Behältnis abgezogenen körnigen mineralischen Stoffe umfasst und die Austrittsmündung (36b) des Kanals (36) an dieses zweite Behältnis angeschlossen ist.

## Claims

1. A slide-type extractor (30) for the extraction and the transfer of granular mineral materials at high temperature contained in a first enclosure including:
- a fixed upper part (32) and a mobile lower part (34) delimiting a duct (36), this duct (36) being provided with an inlet mouth (36a) suitable for being connected to the first enclosure and with an outlet mouth (36b), the inlet (36a) and outlet mouths (36b) being horizontally and vertically offset;
the mobile lower part (34) being movable in a determined direction (50) reciprocally between a advanced position and a retracted position to allow the flow of the granular mineral materials in the duct (36); and
- means (78, 80) for moving and guiding the mobile part (34) relative to the fixed part (32);
**characterized in that** the fixed part (32) and the mobile part (34) each comprise a metal outer shell (38, 58), and an inner shell (40; 60) made by stacking at least:
- a first coating (42; 62) of thermally insulating material mounted on the metal outer shell (38; 58); and
- a second coating (44; 64) of refractory material mounted on the first coating (42, 62).

2. The slide-type extractor (30) according to claim 1, **characterized in that** the mobile part (34) comprises a bottom wall (66), or base, having an upstream end (66a) vertically in line with the inlet mouth (36a) and a downstream end (66b) turned toward the outlet mouth (36b);
and **in that** the base (66) is inclined from top to bottom, from its upstream end (66a) toward its downstream end (66b).

3. The slide-type extractor according to claim 2, **characterized in that** the upstream end (66a) of the base (66) comprises a step (72) transverse to the movement direction (50) of the mobile part (34).

4. The slide-type extractor according to any one of claims 1 to 3, **characterized in that** it comprises sealing means arranged between and/or around the fixed (32) and mobile (34) parts, such that the duct (36) is hermetically sealed.

5. The slide-type extractor according to any one of claims 2 or 3 in combination with claim 4, **characterized in that** the mobile part (34) comprises first and second side walls (68) parallel to its movement direction (50), these first and second side walls (68) each having an upstream end and a downstream end; and
**in that** the sealing means comprise a bellows (82) connected on the one hand to the fixed part (32) and on the other to the downstream ends of the bottom wall (66) and of the first and second side walls (68) of the mobile part (34).

6. The slide-type extractor according to claim 4 or 5, **characterized in that** the fixed part (32) comprises first and second side walls (48) parallel to the movement direction (50) of the mobile part (34);
**in that** the first and second side walls (68) of the mobile part (34) have, close to their upper edges, at least one groove (74) or rib formed in the coating of refractory material (64), parallel to the movement direction (50) of the mobile part (34); and
**in that** the first and second walls (48) of the fixed part have, close to their lower edges, at least one rib (54) or groove formed in the coating of refractory material (44), parallel to the movement direction (50) of the mobile part (34), and arranged to cooperate without contact with, respectively, the groove (74) or rib formed in the coating of refractory material (64) of the mobile part (34).

7. The slide-type extractor according to any of claims 4 to 6, **characterized in that** the mobile part (34) comprises a third side wall (70) transverse to its movement direction (50), connecting the first and second side walls (68); and
**in that** the fixed part (32) comprises a third side wall (52) transverse to the movement direction (50) of the mobile part (34), connecting the first and second side walls (48).

8. The slide-type extractor according to claim 7, **characterized in that** the sealing means comprise:
- a channel (56) extending from the first, second and third side walls (48, 52) of the fixed part, shaped as a "U" in top view, surrounding the first, second and third side walls (68 , 70) of the mobile part (34), and containing a fluid, such as water or oil, or a granular composition, such as sand;
- a return (76) extending from the first, second and third side walls (68, 70) of the mobile part (34), immersed in the fluid or the granular composition; and
**in that** the return (76) is arranged to move within the channel (56) without contact with the latter, during the movement of the mobile part (34).

9. An installation **characterized in that** it includes:
- a first enclosure adapted to heat granular mineral materials at high temperature; and
- a slide-type extractor according to any one of claims 1 to 8.

10. The installation according to claim 9, **characterized in that** it includes a second enclosure for receiving the granular mineral materials extracted from the first enclosure, and the outlet mouth (36b) of the duct (36) is connected to this second enclosure.
